# EUROPEAN PATENT SPECIFICATION

(11) **EP 1 219 529 B1**
(45) Date of publication and mention of the grant of the patent: **22.09.2004**
(21) Application number: 01130718.8
(22) Date of filing: 21.12.2001
(51) Int. Cl.: B62D 25/08

(54) **Vehicle front body structure**
Vorderwagenaufbau eines Fahrzeuges
Structure avant de carrosserie de véhicule

(30) Priority: 26.12.2000 JP 2000395910
(43) Date of publication of application: 03.07.2002
(73) Proprietor: HONDA GIKEN KOGYO KABUSHIKI KAISHA, Minato-ku Tokyo (JP)
(72) Inventor: Kashiwagi, Masakazu, Wako-shi, Saitama (JP); Sasaki, Katsuaki, Wako-shi, Saitama (JP); Okabe, Kojiro, Wako-shi, Saitama (JP); Takahashi, Makoto, Wako-shi, Saitama (JP)
(74) Representative: Prechtel, Jörg, Dipl.-Phys. Dr.

(56) References cited:
- EP-A- 0 763 448
- US-A- 5 876 077
- US-A- 6 106 039

## Description

This invention relates to a vehicle front body structure, and more particularly, to an energy absorbing structure primarily for protection of pedestrians' legs.

Japanese Patent Laid-Open Publication No. HEI-6-255533 entitled "Vehicle Front Body Structure", for example, discloses a structure including a body frame serving as a main frame member for a front body, and a crush beam serving as an impact energy absorbing member in a vehicle front collision. Those members are designed as distinct members. Provision of the crush beam fixed to the body frame is limited to a region effective as a crush zone. In a vehicle front collision, the crush beam will be buckled and crushed as it is intended.

This conventional front body structure is, however, designed to be an impact absorbing structure effective for collision between vehicles or collision between a vehicle and some construction such as an electric pole or a guardrail. And thus this impact absorbing structure is not intended for protection of objects to be protected including pedestrians (hereinafter referred to as "protection objects"). Further, US6106039A discloses the features of the preamble of claim 1.

The present invention provides a vehicle front body structure capable of protecting protection objects as well as offering protection in collision between vehicles.

According to an aspect of the present invention, there is provided a vehicle front body structure, which comprises: left and right side frames extending in the longitudinal direction of a vehicle body; left and right first impact absorbing members provided at front ends of the left and right side frames, respectively, for absorbing impact caused by collision with a vehicle; and second impact absorbing members provided at front ends of the left and right first impact absorbing members for absorbing impact caused by collision with an object to be protected, wherein each of the second impact absorbing members has a generally U-shaped cross-section and comprises an upper flange and a lower flange each having a front end and extending forward from respective one of the first impact absorbing members, and a web connecting the front ends of the upper and lower flanges, and the web has a thickness greater than those of the upper and lower flanges.

In the present invention, an impact energy caused by collision between vehicles is thus absorbed by the first impact absorbing members buckled. In collision with a protection object, the second impact absorbing member is buckled with the thinner upper and lower flanges buckled, preventing the buckling of the thicker web. That is, the web is made thicker to minimize the plastic deformation thereof. In compensation, the upper and lower flanges are made thinner to promote plastic deformation of the flanges. The upper and lower flanges extending in the longitudinal direction allow longer distance and time period from the plastic deformation starting point to the plastic deformation end point, resulting in even and long-duration impact energy absorption. This causes plastic deformation to begin with a relatively small force and enables a reduced reactive force, thereby providing sufficient protection to a protection object in collision with the object.

In the present invention, the upper and lower flanges extending forward of the first impact absorbing members are preferably inclined upward or downward; and an angle of inclination of the upper and lower flanges is preferably set at at least (T/L) radian in which T is the thickness of the flanges and L is the length of the flanges. That is, the upper and lower flanges are inclined at a predetermined angle with respect to a horizontal line so as to promote bending deformation of the flanges, increasing the responsivity, thereby further mitigating collision impact to a protection object. The bending deformation of the flanges can absorb more energy with a reduced stroke, allowing a space accommodating the second impact absorbing member to be smaller.

A corner formed between the upper or lower flange and the web is preferably curved to have a radius of curvature set at three to five times the thickness of the flanges. The rounded corners between the flanges and the web allow the flanges to be smoothly deformed downward (or upward). It has been found that the radius of curvature less than three times the thickness of the flanges is disadvantageously too small to facilitate development of the corner. The radius of curvature more than five times the thickness of the flanges is too large to leave sufficient linear sections of the flanges, causing possible decrease in energy absorption efficiency due to increase in peak acceleration. Accordingly it is desirable to select the radius of curvature in a range from three to five times the thickness of the flanges.

A preferred embodiment of the present invention will be described in detail below, by way of example only, with reference to the accompanying drawings, in which:
FIG. 1 is a plan view illustrating a front body structure according to the present invention;
FIG. 2 is an enlarged view taken at portion 2 in FIG. 1;
FIG. 3 is a cross-sectional view taken along line 3-3 in FIG. 2;
FIGS. 4A and 4B are diagrams illustrating function of a second impact absorbing member shown in FIG. 3; and
FIG. 5A is a graph illustrating an impact absorption effect in a comparative example, and FIG. 5B is a graph illustrating an impact absorption effect in the present embodiment.

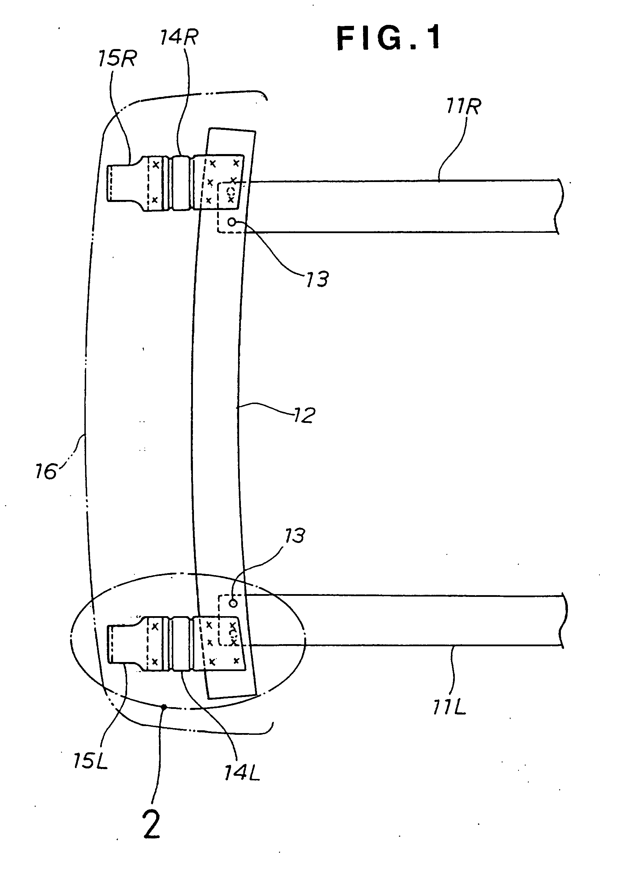

Referring to FIG. 1, a vehicle front body structure has left and right side frames 11L, 11R (L indicates left and R indicates right. This applies hereinafter.), a bumper beam 12 extended between and fixed with a plurality of bolts 13 to the frames 11L, 11R, left and right first impact absorbing members 14L, 14R for absorbing impact of collision between vehicles, provided respectively at left and right end portions of the bumper beam 12 and at front end portions of the left and right side frames 11L, 11R, second impact absorbing members 15L, 15R for absorbing impact of collision with protection objects, provided at front portions of the left and right first impact absorbing members 14L, 14R, and a bumper face 16 covering those members.

When an external force acts on the middle section of the bumper face 16, the bumper face 16 bends in a sufficient manner. When an external force acts on either of the sides opposite to the left and right side frames 11L, 11R, the side frame 11L or 11R resists it, resulting in insufficient energy absorption. In order to solve this problem, the first impact absorbing members 14L, 14R and the second impact absorbing members 15L, 15R are provided only at the front ends of the side frames 11L, 11R. This allows the impact absorption properties of the vehicle to be even in the transverse direction.

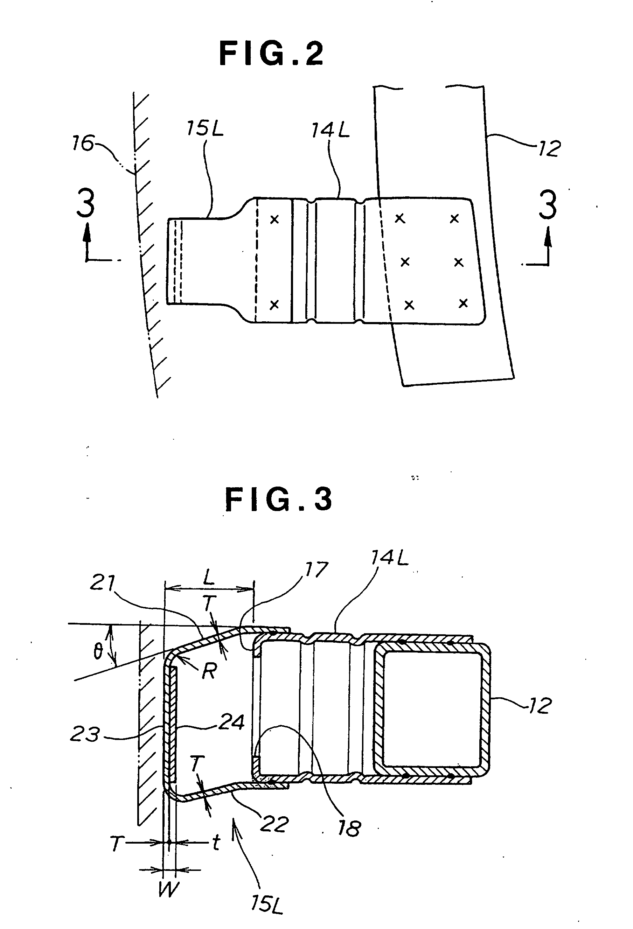

FIG. 2 shows the first impact absorbing member 14L welded to the bumper beam 12, and the second impact absorbing member 15L for protection objects, welded to the first absorbing member 14L.

Referring to FIG.3, the first absorbing member 14L is in a bellows-like shape so as to be buckled and plastically deformed when receiving a large impact from the left in the figure, thereby absorbing the impact energy. A sufficiently large opening 18 is provided in a front wall 17 of the first absorbing member 14L. The opening 18 serves as a hole for accommodating the second absorbing member 15L plastically deformed to a large extent as described later.

The second absorbing member 15L is a cross-sectionally U-shaped member consisting of an upper flange 21 and a lower flange 22 extending forward of the first absorbing member 14L by length L, and a web 23 connecting the front ends of the upper and lower flanges 21, 22. The web 23 has a thickness greater than that of the upper and lower flanges 21, 22. Specifically, with the thickness of the flanges 21, 22 denoted by "T" and that of the web 23 by "W," T<W.

In this embodiment, a reinforcement plate 24 having thickness t is attached to the web 23 of thickness T so that (T+t)=W. This allows the second absorbing member 15L to be obtained only by bending a blank of the thickness T to prepare a preformed member substantially in a U shape, followed by attachment of the reinforcement plate 24 of the thickness t thereto. Alternatively, the second absorbing member 15L may be obtained by bending a blank of the thickness T with the reinforcement plate 24 of the thickness t welded thereto. Thus degree of freedom in processing is increased.

In a further alternative, the second absorbing member 15L may be produced by preparing a flat plate having thickness W at the middle and thickness T at the opposite ends in a rolling process and bending it.

Now, description is made first to the effect of making the web 23 thicker than the flanges 21, 22.

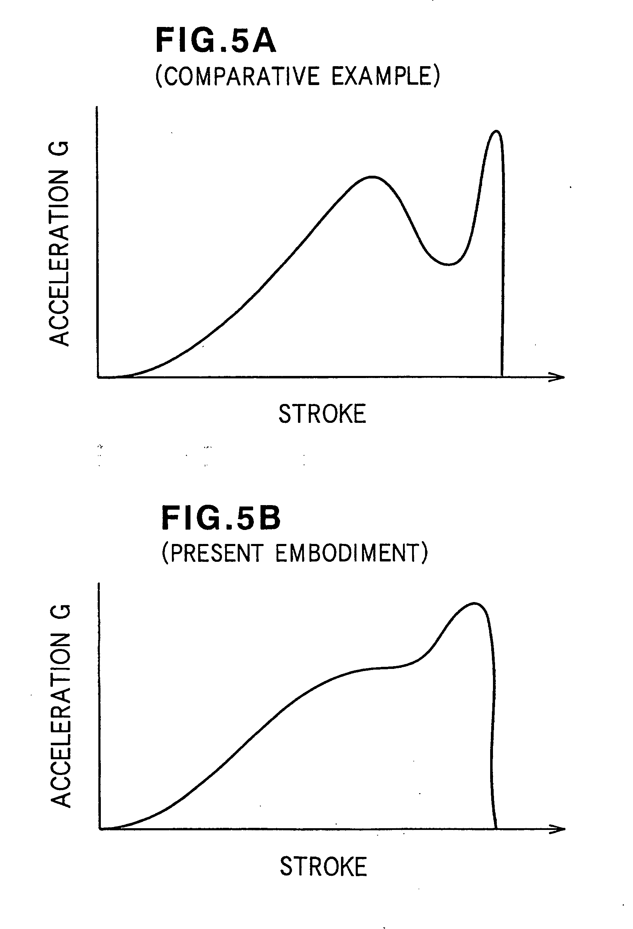

If the web 23 has the thickness identical to that of the flanges 21, 22, the web 23 first receives an external force and bends in a dogleg shape before the flanges 21, 22 do. More specifically, the opposite ends of the web 23 are supported on the flanges 21, 22 while the middle section of the web 23 is free, so that a horizontal external force applied to the web 23 causes the web 23 to be bent in a dogleg shape. Such bending occurs at a low acceleration (hereinafter referred to as a "G"). On the other hand, the subsequent buckling of the flanges 21, 22 occurs at a G significantly greater than that of the web 23. Thus, with the web and flanges having the same thickness, the G is lower in the former-half of plastic deformation of the second absorbing member, and greater in the latter-half (this will be described with reference to FIG. 5A). In order to improve impact energy absorption, it is required to make the G peak lower.

The present invention suppresses deformation of the web 23 by providing the web 23 with a larger thickness. In compensation, the flanges 21, 22 are made thinner to promote the plastic deformation thereof. As a result, the flanges 21, 22 are deformed in the overall range of plastic deformation, averaging the G, and thereby achieving a lower peak (See FIG. 5B).

The upper and lower flanges 21, 22 are preferably inclined downward at an inclination angle of θ radian, and a corner formed between the flange 21 and the web 23 is curved with a radius of curvature R as shown in the figure. The resulting effects will be described with reference to the figures.

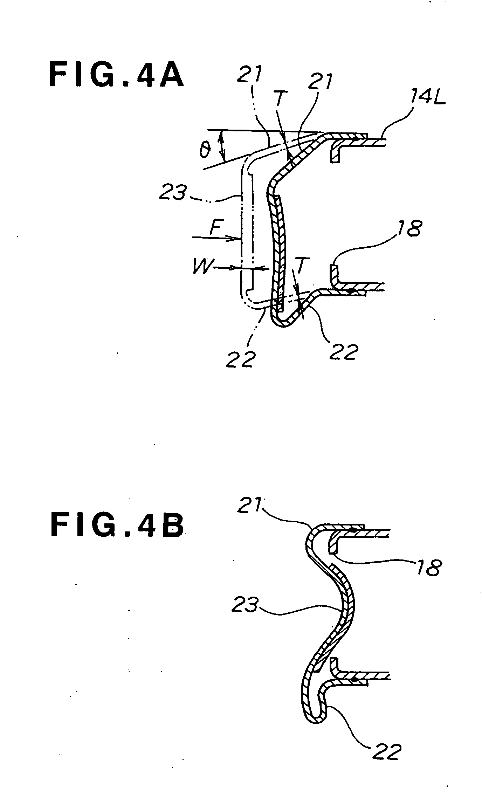

FIGS. 4A and 4B illustrate the function of the upper and lower flanges 21, 22 with the inclination angle θ and the curved corner.

In FIG. 4A, imaginary lines depict the second absorbing member 15L before deformation, and solid lines depict the middle of deformation. When an external force F acts on the member 15L, the flanges 21, 22 bend downward before buckling. This is resulted from the inclination given to the flanges 21, 22. The web 23 moves downward accordingly.

FIG. 4B shows the last stage of plastic deformation in which the flanges 21, 22 are drawn downward. The curves of curvature radius R (See FIG. 3) provided in the corners between the flanges 21, 22 and the web 23 are effective in plastically deforming the flanges 21, 22 in such a downwardly drawing manner. That is, a large curvature facilitates development of the curve as shown in the figure.

Upon studying, the present inventors have found that the radius of curvature R should be selected in a range from three to five times the thickness of the flanges. It has been confirmed that the radius of curvature R less than three times the thickness of the flanges is disadvantageously too small to enable easy development of the corners. The radius of curvature R more than five times the thickness of the flanges provides too large curves to leave sufficient linear sections of the flanges 21, 22, resulting in possible decrease in energy absorption efficiency due to an increased peak G.

For the foregoing reasons, the radius of curvature R is selected in a range from three to five times the thickness of the flanges.

It has also been found that the angle of inclination θ should be set at at least (T/L) radian in which T is the thickness of the flanges and L is the length of the flanges.

With the inclination angle less than (T/L) radian, the flanges 21, 22 bend downward while buckling, unlikely to function as successively shown in FIGS. 4A to 4B.

Thus, the inclination angle θ is set not less than (T/L) radian.

Also, the inclination angle θ is set not greater than 5x(T/L) radian, and is preferably set at 3(T/L) radian. The inclination angle θ greater than 5x(T/L) radian causes the flanges 21, 22 to be bendably deformed only at the front ends (intersecting points with the web 23) at the input of impact, resulting in less energy absorption.

For supplemental explanation of (T/L) radian, where L=100mm and T=1.0mm, for example, (T/L) radian=(1/100) radian=0.01 radian. Tan(0.01 radian)=0.010. With 0.2 or less radian, tan(T/L radian)=(T/L), approximately.

Accordingly, the inclination of (T/L) radian corresponds to that of the flanges 21, 22 with the front ends (intersections with the web 23) lowered (or raised) by T from a horizontal line.

FIGS. 5A and 5B are comparative graphs illustrating impact absorption effects. The horizontal axis indicates stroke and the vertical axis indicates acceleration.

FIG. 5A is of a comparative example with the flanges and web having the sameithickness. It is found in the figure that the higher peak occurs in the last stage of a stroke.

FIG. 5B is of the embodiment with the thinner flanges and the thicker web. It is found that the peak is lower.

The expression "the first impact absorbing members are provided at front end portions of the side flames" includes both the case where the first absorbing members are directly provided at the front end portions of the side frames and the case where the first absorbing members are provided indirectly to the front portions of the side frames via the bumper beam or brackets.

## Claims

1. A vehicle front body structure comprising:
left and right side frames (11L, 11R) extending longitudenally of a vehicle body;
left and right first impact absorbing members (14L, 14R) provided at front ends of said left and right side frames, respectively, for absorbing impact caused by collision with a vehicle; and
second impact absorbing members (15L, 15R) provided at front ends of said left and right first impact absorbing members for absorbing impact caused by collision with an object to be protected,
**characterised in that**
each of said second impact absorbing members has a generally U-shaped cross-section and comprises an upper flange (21) and a lower flange (22) each having a front end and extending forward from respective one of said first impact absorbing members, and a web (23) connecting the front ends of said upper and lower flanges, and said web has a thickness greater than those of said upper and lower flanges.

2. The front body structure of claim 1, wherein said upper and lower flanges (21, 22) extending forward of said first impact absorbing members (14L, 14R) are inclined upward or downward, and an angle of inclination (θ) of said upper and lower flanges is set at at least (T/L) radian in which T is the thickness of said flanges and L is the length of said flanges.

3. The front body structure of claim 1, wherein a corner formed between said upper or lower flange (21, 22) and said web (23) is curved to have a radius of curvature (R) set at three to five times the thickness of said flanges.

4. The front body structure according to claim 2, wherein a corner formed between said upper or lower flange (21, 22) and said web (23) is curved to have a radius of curvature (R) set at three to five times the thickness of said flanges.

## Patentansprüche

1. Vordere Fahrzeugkarosseriestruktur, umfassend:
linke und rechte Seitenrahmen (11L, 11R), die sich in Längsrichtung entlang einer Fahrzeugkarosserie erstrecken;
linke und rechte erste Aufprall-Dämpfungsbauteile (14L, 14R), die jeweils an vorderen Enden des linken und des rechten Seitenrahmens vorgesehen sind, um einen durch eine Kollision mit einem Fahrzeug verursachten Aufprall zu dämpfen; und
zweite Aufprall-Dämpfungsbauteile (15L, 15R), die an vorderen Enden des linken und des rechten ersten Aufprall-Dämpfungsbauteils vorgesehen sind, um einen durch eine Kollision mit einem zu schützenden Objekt verursachten Aufprall zu dämpfen,
**dadurch gekennzeichnet,**
**dass** jedes der zweiten Aufprall-Dämpfungsbauteile einen im Wesentlichen U-förmigen Querschnitt aufweist und umfasst: ein oberes Ansatzstück (21) und ein unteres Ansatzstück (22), welche beide ein vorderes Ende aufweisen und sich vom jeweiligen der ersten Aufprall-Dämpfungsbauteile nach vorne erstrecken, und einen Steg (23), der die vorderen Enden des oberen und des unteren Ansatzstücks verbindet, wobei der Steg eine Dicke aufweist, die größer ist als die des oberen und des unteren Ansatzstücks.

2. Vordere Fahrzeugkarosseriestruktur nach Anspruch 1, bei der das obere und das untere Ansatzstück (21, 22), welche sich von den ersten Aufprall-Dämpfungsbauteilen (14L, 14R) nach vorne ersfrecken, nach oben oder nach unten geneigt sind, und ein Neigungswinkel (θ) des oberen und des unteren Ansatzstücks bei mindestens (T/L) im Bogenmaß festgesetzt ist, wobei T die Dicke der Ansatzstücke und L die Länge der Ansatzstücke ist.

3. Vordere Fahrzeugkarosseriestruktur nach Anspruch 1, bei der eine zwischen dem oberen oder dem unteren Ansatzstück (21, 22) und dem Steg (23) gebildete Ecke so gekrümmt ist, dass sie einen Krümmungsradius (R) aufweist, der bei dem drei- bis fünffachen der Dicke der Ansatzstücke festgesetzt ist.

4. Vordere Fahrzeugkarosseriestruktur nach Anspruch 2, bei der eine zwischen dem oberen oder dem unteren Ansatzstück (21, 22) und dem Steg (23) gebildete Ecke so gekrümmt ist, dass sie einen Krümmungsradius (R) aufweist, der bei dem drei- bis fünffachen der Dicke der Ansatzstücke festgesetzt ist.

## Revendications

1. Structure avant de carrosserie de véhicule comprenant :
des châssis latéraux gauche et droit (11L, 11R) s'étendant dans le sens longitudinal d'une carrosserie de véhicule ;
des premiers éléments amortisseurs d'impact gauche et droit (14L, 14R) aménagés respectivement sur les extrémités avant desdits châssis latéraux gauche et droit, destinés à amortir un impact provoqué par une collision avec un véhicule ; et
des seconds éléments amortisseurs d'impact gauche et droit (15L, 15R) aménagés sur les extrémités avant desdits premiers éléments amortisseurs d'impact gauche et droit destinés à amortir un impact provoqué par une collision avec un objet devant être protégé,
**caractérisé en ce que** :
chacun desdits seconds éléments amortisseurs d'impact a une coupe transversale générale en forme de U et comprend une bride supérieure (21) et une bride inférieure (22), chacune ayant une extrémité avant et s'étendant vers l'avant à partir d'un élément respectif desdits premiers éléments amortisseurs d'impact, et une paroi (23) qui connecte les extrémités avant desdites brides supérieure et inférieure, et ladite paroi a une épaisseur plus grande que celle desdites brides supérieure et inférieure.

2. Structure de carrosserie avant selon la revendication 1, dans laquelle lesdites brides supérieure et inférieure (21, 22) qui s'étendent à l'avant desdits premiers éléments amortisseurs d'impact (14L, 14R) sont inclinées vers le haut ou vers le bas, et dans laquelle un angle d'inclinaison (θ) desdites brides supérieure et inférieure est réglé au moins sur un radian (T/L) dans lequel T représente l'épaisseur desdites brides et L représente la longueur desdites brides.

3. Structure de carrosserie avant selon la revendication 1, dans laquelle un angle formé entre ladite bride supérieure ou ladite bride inférieure (21, 22) et ladite paroi (23) est courbé de manière à avoir un rayon de courbure (R) réglé de manière à avoir de trois à cinq fois l'épaisseur desdites brides.

4. Structure de carrosserie avant selon la revendication 2, dans laquelle un angle formé entre ladite bride supérieure ou ladite bride inférieure (21, 22) et ladite paroi (23) est courbé de manière à avoir un rayon de courbure (R) réglé de manière à avoir de trois à cinq fois l'épaisseur desdites brides.
